# EUROPÄISCHE PATENTANMELDUNG

(11) **EP 1 764 707 A1**
(43) Veröffentlichungstag der Anmeldung: **21.03.2007**
(21) Anmeldenummer: 05020440.3
(22) Anmeldetag: 20.09.2005
(51) Int. Cl.: G06F 17/24, G06F 9/44

(54) **Verfahren zur Generierung eines Dokumentes, das einen Prozess repräsentierende Daten enthält**

(71) Anmelder: Siemens Schweiz AG, 8047 Zürich (CH)
(72) Erfinder: Steiner, Thomas, 8906 Bonstetten (CH)
(74) Vertreter: Kley, Hansjörg

(57) **Zusammenfassung**

In software-entwicklenden Organisationen sind das Projektmanagement und die damit verbundenen Instrumente für die Definition, für die Steuerung und für die Überwachung der Prozesse die Erfolgsfaktoren schlechthin. Es wird ein Verfahren vorgeschlagen, bei dem die zu erzeugenden Projekt- und Prozessdokumente spezifisch gestützt auf organisationsspezifische und projektspezifische Regeln (DepR) auf eine reproduzierbare Weise generiert werden.

## Beschreibung

Die vorliegende Erfindung betrifft Verfahren zur Generierung eines Dokumentes, das einen Prozess repräsentierende Daten enthält gemäss dem Oberbegriff des Patentanspruchs 1.

In software-entwicklenden Organisationen sind das Projektmanagement und die damit verbundenen Instrumente für die Definition, für die Beschreibung, für die Steuerung und für die Überwachung der Prozesse die Erfolgsfaktoren schlechthin. Mit diesen Instrumenten soll das Ergebnis eines Software-Entwicklungsprozesses hinsichtlich der Erfüllung der technischen Anforderungen, der Zeit- und Aufwandvorgaben sichergestellt werden. Diese Instrumente als Dokumente werden meist als Projekthandbücher (für die Definition und Beschreibung) und Statusreports (für die Steuerung und Überwachung) bezeichnet.

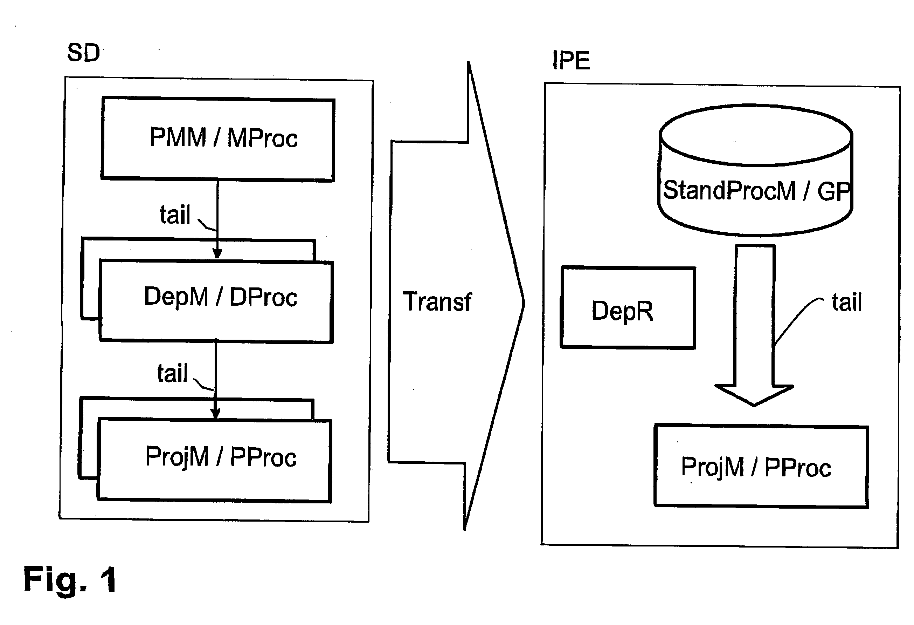

Die Erstellung dieser Projekthandbücher ist in der Figur 1 auf der linken Seite dargestellt. Es ist eine Organisation SD vorgegeben, die in eine Mehrzahl von Abteilungen gegliedert ist. Figur 1 zeigt die prozess- und abteilungsspezifischen Dokumentgenerierung gemäss dem Stand der Technik. Die angegebenen Anpassungen/Adaptionen an die betreffende Abteilung und das entsprechende Projekte erfolgen dabei meist manuell. Eine software-entwickelnde Organisation verfügt über ein Projektmanagementhandbuch PMM, das auf die einzelnen Abteilungen adaptiert werden muss. Die Adaptation/Anpassung ist in der Figur 1 mit dem Bezugszeichen tail dargestellt. Das resultierende abteilungsspezifische Handbuch ist mit DepM bezeichnet. Dabei waren meist manuelle Schritte erforderlich. Innerhalb einer jeden Abteilung laufen verschiedene Entwicklungsprojekte, die zu ihrer Steuerung und Überwachung je ein projektspezifisches Projekthandbuch ProjM erfordern. Auch hier erfolgt die Adaption/Anpassung «tail» manuell. Es ist aber auch möglich, dass ein Projekt in mehreren Abteilungen geführt wird. Dementsprechend gestaltet sich die Generierung eines projektspezifischen Projekthandbuches ProjM aufwendiger.

Zur Nomenklatur: Unter dem Begriff «Dokument» ist ein eine bestimmte Information enthaltender Datenträger zu verstehen. Diese kann ein klassisches Schriftstück sein. Nicht unterschieden wird dabei, das elektronische Abbild dieses Schriftstückes, z.B. als Datei eines Standardprogrammes wie WINWORD oder EXCEL oder eines Projektmanagementwerkzeuges wie OFFICE PROJECT oder dessen Ausdruck auf Papier. Im Sinne dieser Schrift wird unter «Dokumentvorlage» (engl, template) eine die Struktur eines zu erzeugenden Dokumentes beschreibende Datei oder Regel verstanden.

Im Pamphlet WO 2005/041087 A2 [1] ist ein Verfahren zur Erzeugung zeitabhängiger Daten für eine Geschäftsanalyse offenbart. Die Daten entstammen dabei einer Mehrzahl von Anwendungen. Diese erfordert für die Analyse die Bereitstellung von sogenannten Adaptern. Dies ist aufwendig. Zur Lösung dieses Problems wird in der Schrift ein einziger, sogenannt generische Adapter vorgeschlagen.

Mit der Lösung gemäss WO 2005/041087 A2 [1] ist das Problem einer nicht manuellen Erstellung von projektspezifischen Dokumenten noch nicht gelöst, da in [1] lediglich die Inhalte der Dokumente, nicht aber der Struktur auf weniger aufwendige Weise zusammengeführt werden können.

Der vorliegenden Erfindung liegt daher die Aufgabe zugrunde, ein verfahren zur Generierung eines Dokumentes enthaltend einen Prozess repräsentierende Daten anzugeben, das auf die abteilungs- und projektspezifischen Anforderungen leicht anpassbar und reproduzierbar ist, Die Reproduzierbarkeit ist insbesondere bei Projekten, bei denen sicherheitskritische Anforderungen erfüllt werden müssen, von hoher Bedeutung.

Diese Aufgabe wird erfindungsgemäss gelöst durch das im Anspruch 1 angegebene Verfahren.

Vorteilhafte Ausführungsformen der vorliegenden Erfindung sind in den abhängigen Ansprüchen angegeben.

Durch die erfindungsgemässe Generierung eines Dokumentes, das einen Prozess repräsentierende Daten enthält, wonach
a) in einer zweiten Datenbank Standardprozesse (GP) beschreibende Dokumentvorlagen (StandProcM) gespeichert sind;
b) ein projektspezifisches Regelwerk (DepR) aus den in der ersten Datenbank enthaltenen Dokumentvorlagen (StandProcM) ein projektspezifisches Dokument (ProjM) mit leeren Feldern generiert;
c) die aus dem Verfahrensschritt b) entstammenden leeren Felder mit korrespondierenden den Prozess (PPROC) repräsentierende Daten aus der ersten Datenbank versehen werden;
ist ein verfahren geschaffen, das auf reproduzierbare Weise projektspezifische Dokument generiert und durch eine Anpassung des projektspezifischen Regelwerkes leicht an geänderte Anforderung hinsichtlich der zu erzeugenden Dokumente und ihrer Inhalte anpassbar ist.

Ein Ausführungsbeispiel der Erfindung wird nachfolgend anhand der Zeichnung näher erläutert. Dabei zeigen:
- Figur 1: Gegenüberstellung der prozess- und abteilungsspezifischen Dokumentgenerierung gemäss dem Stand der Technik und gemäss der vorliegenden Erfindung;
- Figur 2: Darstellung der Dokumentgenerierung aus verschiedenen Dokumentvorlagen mittels Tailoring-Funktionen.

Zur Nomenklatur: Es ist eine Organisation vorgegeben, die in eine Mehrzahl von Abteilungen gegliedert ist. Figur 1 zeigt eine Gegenüberstellung der prozess- und abteilungsspezifischen Dokumentgenerierung gemäss dem Stand der Technik und gemäss der vorliegenden Erfindung wie folgt: Gemäss den allgemeinen Usanzen des Projektmanagementes und der Qualitätssicherung gibt es auch für eine Software entwickelnde Organisation ein Projektmanagementhandbuch PMM, das je nach Grösse der Organisation auf die einzelnen Abteilungen adaptiert werden muss. Die Adaptierung/Anpassung ist in der Figur 1 mit dem Bezugszeichen tail dargestellt. Das abteilungsspezifische Handbuch ist mit DepM bezeichnet. Dabei sind meist manuelle Schritte erforderlich oder die Adaption erfolgte statisch und einmalig für einen bestimmten längeren Zeitabschnitt. Innerhalb einer jeden Abteilung laufen verschiedene SW-Entwicklungsprojekte, die zu ihrer Steuerung und Überwachung je ein projektspezifisches Projekthandbuch ProjM erfordern. Auch hier erfolgt die Adaption/Anpassung tail manuell. In der Figur 1 sind mit der Notation x / y einerseits das Regelwerk x und andererseits der zu beschreibende/steuernde und zu überwachende Prozess y. also beispielsweise in der Ausprägung auf der Stufe Abteilung DepM / Dproc.

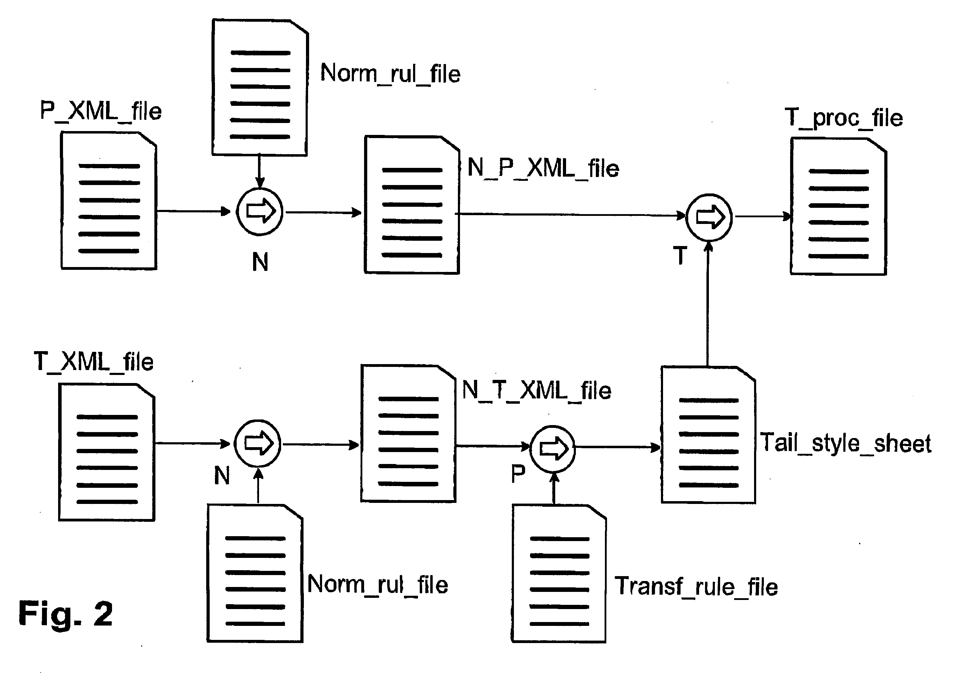

Die Darstellung rechts in Figur 1 ist in einer technischen Sicht in Figur 2 repräsentiert. Der obere Pfad zeigt die Verarbeitungsschritte eines Prozess-XML-Files
1. Pfeil: Strukturbereinigung,
2. Pfeil; Merging des Prozesses mit den Prozessabweichungen = Tailoring.
Der untere Pfad zeigt die Verarbeitungsschritte des Prozess-Delta-Files, in dem die Abweichungen (=reine Tailoring-Infos) zum Prozess-XML-File eingetragen sind.
Schritt 1: Strukturbereinigung,
Schritt 2: Merging der Prozessabweichung mit weiteren Regeln (z.B. Sprache),
Schritt 3: effektives Tailoring.
Normalize beinhaltet: Es wird nur die Struktur eines XML-Files bereinigt, damit der Tailoring-Prozess fehlerfrei ablaufen kann. prepare tailoring stylesheet: Hier wird die strukturbereinigte, "reine" Prozessabweichung mit weiteren Regeln (z.B. Sprache) ergänzt, damit mit einem Standard-XML-Merging Prozess das zuschneiden ausgeführt werden kann und danach mit einem reinen Visualisierungsprozess (ohne Prozess-Intelligenz) visualisiert werden kann.
Tailor: Ist ein Standard-XML-Merging Prozess, welcher von Standard-Funktionen unterstützt wird.
Die in der Figur 2 angegebenen Datei- und Verarbeitungsbezeichnungen bedeuten:
- P_XML_file: Process XML file
- Norm_rul_file: Normalizing rules file
- N_F_XNL_file: Normalized Process XML file
- T_proc_file: Tailored process file
- N: Normalize
- T: Tailor
- T_XML_file: Tailoring XML file
- N_T_XML_file: Normalized Tailoring XML file
- P: Prepare tailoring stylesheet
- Transf_rule_file: Transformation rules files
- Tail_style_sheet: tailoring stylesheet

Die vorstehenden Angaben sind deshalb in englischen Begriffen angegeben, weil dazu keine passenden deutschsprachigen Begriffe existieren.

### Liste der verwendeten Bezugszeichen, Glossar

- DepM: Abteilungshandbuch;
engl. departement Manual beschreibt Abteilungsprozess
- DepR: Abteilungsregeln,
engl. Departement Rules
- DProc: Abteilungsprozess

- GP: Gesamtprozess,
engl. Global Process
- IPE: Integrierte Prozessumgebung,
engl. Integrated process environment
- MProc: Managementprozess
- PMM: Projektmanagmenthandbuch,
engl. Project Management Manual;
beschreibt Software Entwicklungsprozess
- PProc: Projektprozess
- ProjM: Projekt Handbuch;
engl. Project Manual
beschreibt Projektprozess, aus manueller oder regelgetriebener Erzeugung
- SD: Software Entwicklungsorganisation,
Software Development

### StandProcM Starldardprozesshandbuch

- tail: Anpassung, Adaption, manuell oder regelgetrieben engl. Tailoring
- Transf: Transformation der manuellen Anpassung/Adaption in Abteilungsregeln DepR

### Liste der verwendeten Akronyme

- SW: Software

### Literaturliste

[1] WO 2005/041087 A2
   Systems and Methods for acquiring time-dependant data für business process analysisIDS Scheer Aktiengesellschaft, DE - Saarbrücken

## Patentansprüche

1. Verfahren zur Generierung eines projektspezifischen Dokumentes (ProjM) enthaltend einen Prozess (PProc) repräsentierende Daten, wobei die projektspezifischen Daten in einer ersten Datenbank gespeichert sind;
**gekennzeichnet durch** die Verfahrensschritte
a) in einer zweiten Datenbank sind Standardprozesse (GP) beschreibende Dokumentvorlagen (StandProcM) gespeichert;
b) ein projektspezifisches Regelwerk (DepR) generiert aus den in der ersten Datenbank enthaltenen Dokumentvorlagen (StandProcM) ein projektspezifisches Dokument (ProjM) mit leeren Feldern;
c) die aus dem Verfahrensschritt b) entstammenden leeren Felder werden mit korrespondierenden den Prozess (PPROC) repräsentierenden Daten aus der ersten Datenbank versehen.

2. Verfahren nach Anspruch 1,
**dadurch gekennzeichnet, dass**
das projektspezifische Dokument hierarchisch aus folgenden Dokumenten generiert wird:
(i) aus einem organisationsübergreifendes Projektmanagmenthandbuch;
(ii) aus einem Abteilunsregelwerk, wobei mehrere Abteilung eine Organisation bilden
(iii)aus einem projektspezifischen Regelwerk.

3. Verfahren nach Anspruch 1 oder 2,
**dadurch gekennzeichnet, dass**
die Dokumente und Vorlagen im Format XML vorliegen.
